# EUROPÄISCHE PATENTSCHRIFT

(11) **EP 2 413 011 B1**
(45) Veröffentlichungstag und Bekanntmachung des Hinweises auf die Patenterteilung: **13.02.2013**
(21) Anmeldenummer: 11006074.6
(22) Anmeldetag: 25.07.2011
(51) Int. Cl.: F16L 21/03

(54) **Dichtung für das Muffenende eines Rohres**
Seal for the socket end of a pipe
Joint pour l'extrémité de manchon d'un tuyau

(30) Priorität: 30.07.2010 DE 102010032961
(43) Veröffentlichungstag der Anmeldung: 01.02.2012
(73) Patentinhaber: Prabhat Elastomers Pvt Ltd., Mumbai-400083 (IN)
(72) Erfinder: Dhruv, Umesh Khumar, Mumbai-400083 (IN)
(74) Vertreter: Blumbach Zinngrebe

(56) Entgegenhaltungen:
- EP-A1- 0 560 104
- EP-B1- 1 185 809
- DE-U1- 29 703 957

## Beschreibung

### Gebiet der Erfindung

Die Erfindung betrifft eine Dichtung für das Muffenende eines Rohres, insbesondere eines Abflussrohres aus Kunststoff mit einer umlaufenden Nut.

### Hintergrund der Erfindung

Rohrverbindungen mit einer Dichtung, bei welcher ein Rohr in das mit einer Dichtung versehene Muffenende eines weiteren Rohres geschoben wird, sind bekannt. Es handelt sich dabei insbesondere um Abwasserrohre aus Kunststoff.

Aus der Praxis bekannt ist insbesondere das sogenannte Rieber-System, bei dem eine ringförmige Dichtung mit zwei Dichtflächen auf der Innenseite in der Muffe eines Rohrendes sitzt.

Die Europäische Patentschrift EP 1 185 809 B1 beschreibt eine Verbesserung dieses Systems, bei welcher die Außenseite der Dichtung eine vertikal stehende Stufe aufweist und sich von der Stufe ausgehend eine Dichtfläche in einer konstanten Steigung gerade bis zu einer Nase der Dichtung erstreckt. Durch diese Anordnung soll die notwendige Einsteckkraft beim Einschieben des Rohres in das Muffenende reduziert werden.

Nachteilig hat sich aber gezeigt, dass in manchen Fällen die Dichtwirkung der Dichtung verschlechtert wird.

### Aufgabe der Erfindung

Der Erfindung liegt demgegenüber die Aufgabe zugrunde, die Eigenschaften einer gattungsgemäßen Dichtung für das Muffenende eines Rohres weiter zu verbessern.

Zur Verbesserung der Dichtwirkung soll insbesondere auf, im Querschnitt gesehen, größere gerade Flächen, welche eckig aneinander grenzen, verzichtet werden, wobei dennoch die notwendige Einsteckkraft nicht wesentlich erhöht werden soll.

### Zusammenfassung der Erfindung

Die Aufgabe der Erfindung wird bereits durch eine Dichtung für das mit einer Nut versehene Muffenende eines Rohres nach Anspruch 1 gelöst.

Bevorzugte Ausführungsformen und Weiterbildungen der Erfindung sind den jeweiligen Unteransprüchen zu entnehmen.

Die Erfindung betrifft eine Dichtung für das mit einer Nut versehene Muffenende eines Rohres, insbesondere eines Abwasserrohres aus Kunststoff.

Die Nuten dieser Rohre haben in der Regel keine Nut mit einem rechteckigen, sondern eine Nut mit einem im Wesentlichen dreieckigen Querschnitt, bei welchem zwei gerade Abschnitte im stumpfen Winkel aufeinander zulaufen. Im Übergangsbereich der geraden Abschnitte ist die Nut abgerundet.

Die Dichtung ist beispielsweise für Rohre mit einem Durchmesser zwischen 50 und 600 mm ausgebildet.

Die Dichtung ist ringförmig zum Einsetzen in die Nut ausgebildet, wodurch eine Mittelachse definiert wird, um welche sich die Dichtung ringförmig und symmetrisch erstreckt.

In einer Schnittansicht entlang einer Ebene, welche auf der Mittelachse der Dichtung liegt, weist die Dichtung eine vordere Nase auf.

"Vorne" im Sinne der Erfindung ist die Seite der Dichtung, von welcher bei bestimmungsgemäßem Gebrauch das Rohr in die Muffe eingeschoben wird. Auf der Innenseite, also der dem einzuschiebenden Rohr zugewandten Seite der Dichtung schließt sich an die vordere Nase, welche in der Regel abgerundet ist, eine innere Lippendichtung an, welche zur Anlage an die Außenfläche des einzuschiebenden Rohres ausgebildet ist. An die Lippendichtung schließt sich eine Nut an, in welcher die Lippendichtung beim Einschieben des Rohres zur Anlage kommt. An die Nut schließt sich eine weitere innere Dichtfläche an, die an einer hinteren Ecke der Dichtung endet. Unter "hinten" im Sinne der Erfindung wird die der Nase gegenüberliegende Seite verstanden.

Definitionsgemäß im Sinne der Erfindung wird unter "oben" der muffenseitige, also äußere Bereich der Dichtung verstanden und unter "unten" der Bereich, welcher an das einzusteckende Rohr angrenzt.

Die Außenseite der Dichtung umfasst eine von der Nase ausgehende, gegenüber einer Mittelachse der Dichtung nach oben geneigte erste Fläche sowie eine von der hinteren Ecke ausgehende, ebenfalls nach oben geneigt zweite Fläche, welche dachförmig bzw. in einem stumpfen Winkel aufeinander zulaufen. An diesen äußeren Flächen kommt die Nut des Muffenendes des Rohres dichtend zur Anlage.

Gemäß der Erfindung sind im Übergangsbereich der nach oben geneigten ersten Fläche und der nach oben geneigten zweiten Fläche zumindest zwei Stufen vorhanden, wobei ansonsten der Übergangsbereich angrenzend an die Stufen abgerundet ausgebildet ist.

Im Gegensatz zum Gegenstand der in der EP 1 185 809 B1 beschriebenen Dichtung wird also auf eine vertikale Stufe, welche an eine gleichförmig gerade verlaufende Fläche angrenzt, verzichtet. Vielmehr haben die Erfinder herausgefunden, dass durch zwei Stufen, welche nicht zwingend eine vertikale Fläche aufweisen müssen und welche auf einem abgerundeten Übergangsbereich verteilt sind, sich eine verbesserte Dichtwirkung bei dennoch geringer Einsteckkraft erreichen lässt.

Bei einer bevorzugten Ausführungsform der Erfindung ist der Übergangsbereich zwischen einer unteren Stufe und der von der Nase ausgehenden nach oben ersten Fläche, welche sich vorzugsweise gerade nach oben erstreckt, als Hohlkehle ausgebildet. Diese Hohlkehle erstreckt sich zum Abrunden des Übergangsbereichs vorzugsweise über mehr als 20% der Länge der ersten nach oben geneigten Fläche. Die Hohlkehle kann in der Schnittansicht der Kontur eines Kreises oder eines Ovals folgen.

Vorzugsweise ist der Übergangsbereich zwischen einer oberen Stufe und der zweiten, also der hinten liegenden, geneigten Fläche als Abrundung ausgebildet. Die Abrundung hat vorzugsweise einen Radius, der mindestens der Höhe der Stufe entspricht.

Vorzugsweise erstreckt sich die Abrundung über zumindest 5% der Länge der zweiten nach oben geneigten Fläche.

Bei einer Weiterbildung der Erfindung ist zumindest eine, vorzugsweise sind beide nach vorne zeigenden Flächen der Stufe gegenüber einer senkrecht zur Mittelachse der Dichtung verlaufenden Ebene in Richtung außen vorne geneigt. Die Stufen verlaufen also nicht vertikal und damit senkrecht zur Mittelachse, sondern sind leicht nach vorne geneigt, insbesondere in einem Winkel von mindestens 5º, vorzugsweise 10º.

Die Stufen sind in der Regel gegenüber der Lippendichtung angeordnet und erstrecken sich in axialer Richtung nicht über die Länge der Lippendichtung hinaus.

Bei einer Weiterbildung der Erfindung umfasst die Fläche, welche sich von der Nase über die Lippendichtung erstreckt, zwei im wesentlichen gerade Flächenabschnitte, welche in einem stumpfen Winkel aufeinander zulaufen, insbesondere in einem Winkel zwischen 130º und 155º.

Die Lippendichtung ist vorzugsweise abgerundet, insbesondere beträgt der Radius der Abrundung mindestens das 0,3-fache der Dicke der Lippendichtung.

### Beschreibung der Zeichnungen

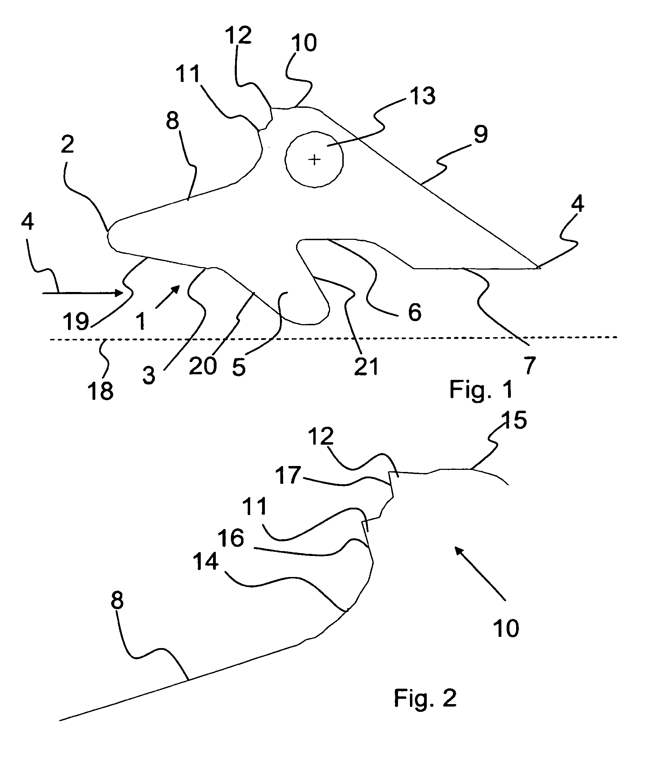

Die Erfindung soll im Folgenden Bezug nehmend auf ein schematisch dargestelltes Ausführungsbeispiel anhand der Zeichnungen Fig. 1 und Fig. 2 näher erläutert werden.

Fig. 1 zeigt, schematisch dargestellt, den Querschnitt einer Dichtung 1 entlang einer senkrecht zur Mittelachse der ringförmigen Dichtung 1 verlaufenden Ebene. Die Dichtung 1 umfasst eine vordere Nase 2 und eine hintere Ecke 4. Der in dieser Ansicht obere Teil der Dichtung 1 bildet die Außenseite der Dichtung, welche in der Nut eines Rohres (nicht dargestellt) zur Anlage kommt.

Der der zu einer Mittelachse parallel verlaufenden Geraden 18 gegenüberliegende untere Teil der Dichtung 1 mit einer Lippendichtung 5 dient der Anlage an das einzuschiebende Rohr (nicht dargestellt). Die Einschubrichtung ist mit dem Pfeil 4 gekennzeichnet.

Das Verhältnis der Länge der Dichtung 1 von vorne nach hinten zu ihrer Höhe beträgt vorzugsweise zwischen 1,5:1 und 3:1.

An die abgerundete Nase 2 schließt sich auf der Innenseite eine erste, innere Dichtfläche 3 an. Diese innere Dichtfläche 3 geht in die dahinterliegende Lippendichtung 5 über. Die innere Dichtfläche 3 umfasst die Abschnitte 19 und 20, welche im stumpfen Winkel, insbesondere in einem Winkel zwischen 110º und 155º aufeinander zulaufen.

Die Lippendichtung 5 schließt auf der Außenseite gegenüber einer parallel zur Mittelachse verlaufenden Gerade 18 einen Winkel von 135º bis 155º ein.

An ihrer Spitze ist die Lippendichtung 5 abgerundet. Der rückseitige Abschnitt der Lippendichtung 21 geht in eine Nut 6 über. Der Winkel des Abschnitts 21 zur Nut 6 beträgt vorzugsweise zwischen 50º und 70º.

An die Nut 6 schließt sich eine weitere innere Dichtfläche 7 an, welche parallel zur Mittelachse der Dichtung 1 verläuft.

Das hintere Ende der Dichtung 1 bildet eine Spitze 4. Auf der Außenseite, also der oberen Seite der Dichtung, befinden sich eine erste nach oben geneigte Fläche 8 sowie eine zweite nach oben geneigte Fläche 9, welche gleichförmig gerade aufeinander zulaufen und einen Winkel von 110º bis 130º einschließen würden.

Die hintere zweite, nach oben geneigte Fläche 9 ist steiler als die vordere erste, nach oben geneigte Fläche 8, welche von der abgerundeten Nase 2 ausgeht.

Insbesondere steht die erste nach oben geneigte Fläche 8 in einem Winkel zwischen 15º und 25º zur Mittelachse, wohingegen die zweite nach oben geneigte Fläche 9 in einem Winkel von 25º bis 40º gleichförmig nach oben läuft.

Die zweite, hintere obere Fläche 9 läuft so höher aus als die erste nach oben geneigte Fläche 8.

Im Übergangsbereich 10 zwischen den beiden nach oben geneigten Flächen 8, 9 sind eine untere Stufe 11 und eine obere Stufe 12 angeordnet. Ansonsten ist der Übergangsbereich 10 abgerundet ausgebildet.

Die Dichtung 1 hat einen Durchmesser zwischen 125 und 500 mm und weist zur Verstärkung einen einvulkanisiertem Metallring 13 auf.

Bezug nehmend auf Fig. 2 sollen die Details des Übergangsbereichs (10 in Fig. 1) näher erläutert werden. Der Übergangsbereich 10 umfasst die Stufen 11 und 12.

Die nach vorne geneigten Flächen 16 und 17 der Stufen verlaufen nicht vertikal, sondern sind gegenüber einer senkrecht zur Mittelachse der Dichtung verlaufenden Ebene um zumindest 5º nach vorne geneigt.

Unterhalb der Stufe 11 geht eine Hohlkehle 14 in die nach oben geneigte erste Fläche 8 über. Angrenzend an die obere Stufe 12 geht eine Abrundung 15 in die zweite nach oben geneigte Fläche (in Fig. 1) über. Die Gesamthöhe der Stufen 11 und 12 beträgt mindestens 30% des Höhenunterschiedes zwischen dem Ende der ersten nach oben geneigten Flächen 8 und dem Ende der zweiten nach oben geneigten Fläche (9 in Fig. 1).

Durch die Erfindung konnte eine leicht handhabbare Dichtung mit verbesserter Dichtwirkung bereitgestellt werden.

### Bezugszeichenliste:

- 1: Dichtung
- 2: Nase
- 3: innere Dichtfläche
- 4: Pfeil
- 5: Dichtlippe
- 6: Nut
- 7: weitere innere Dichtfläche
- 8: nach oben geneigte erste Fläche
- 9: nach oben geneigte zweite Fläche
- 10: Übergangsbereich
- 11: Stufe
- 12: Stufe
- 13: Metallring
- 14: Hohlkehle
- 15: Abrundung
- 16: nach vorne geneigte Fläche
- 17: nach vorne geneigte Fläche
- 18: Gerade
- 19: Abschnitt
- 20: Abschnitt
- 21: Abschnitt

## Patentansprüche

1. Dichtung (1) für das mit einer Nut versehene Muffenende eines Rohres, insbesondere eines Abwasserrohres,
wobei die Dichtung (1) ringförmig zum Einsetzen in die Nut ausgebildet ist und
in einer Schnittansicht eine vordere Nas (2) aufweist, an welche sich eine innere Lippendichtung (5) schließt, welche zur Anlage an die Außenfläche eines einzuschiebenden Rohres ausgebildet ist,
wobei sich an die Lippendichtung (5) eine Nut (6) und eine weitere innere Dichtfläche (7) anschließt, die an einer hinteren Ecke (4) endet,
und wobei die Außenseite der Dichtung eine von der Nase (2) ausgehende, gegenüber einer Mittelachse der Dichtung nach oben geneigte erste Fläche (8) und eine von der Ecke ausgehende nach oben geneigte zweite Fläche (9) aufweist, welche in einem stumpfen Winkel aufeinander zulaufen,
**dadurch gekennzeichnet, dass** im Übergangsbereich (10) der nach oben geneigten ersten Fläche (8) und der nach oben geneigten zweiten Fläche (9) zumindest zwei Stufen (11,12) vorhanden sind, und dass der Übergangsbereich (10) angrenzend an die stufen (11,12) abgerundet ausgebildet ist.

2. Dichtung (1) nach dem vorstehenden Anspruch, **dadurch gekennzeichnet, dass** der Übergangsbereich zwischen einer unteren Stufe (11) und der von der Nase (2) ausgehenden ersten nach oben geneigten Fläche (8) als Hohlkehle (14) ausgebildet ist.

3. Dichtung (1) nach dem vorstehenden Anspruch, **dadurch gekennzeichnet, dass** sich die Hohlkehle (14) über mehr als 20 % der Länge der ersten nach oben geneigten Fläche (8) erstreckt.

4. Dichtung (1) nach einem der vorstehenden Ansprüche,
**dadurch gekennzeichnet, dass** der Übergangsbereich einer oberen Stufe (12) und der zweiten nach oben geneigten Fläche (9) als Abrundung (15) ausgebildet ist.

5. Dichtung nach dem vorstehenden Anspruch, **dadurch gekennzeichnet, dass** sich die Abrundeng (15) über zumindest 5 % der Länge der zweiten nach oben geneigten Fläche (9) erstreckt.

6. Dichtung (1) nach einem der vorstehenden Ansprüche,
**dadurch gekennzeichnet, dass** zumindest eine, vorzugsweise beide nach vorne zeigenden Flächen (16, 17) der stufen (11,12) gegenüber einer senkrecht zur Mittelachse der Dichtung verlaufenden Ebene in Richtung außen vorne geneigt sind.

7. Dichtung (1) nach einem der vorstehenden Ansprüche,
**dadurch gekennzeichnet, dass** die Stufen (11,12) gegenüber der Lippendichtung (5) (angeordnet sind und sich in axialer Richtung nicht über die Länge der Lippendichtung (5) hinaus erstrecken.

8. Dichtung (1) nach einem der vorstehenden Ansprüche,
**dadurch gekennzeichnet, dass** eine sich von der Nase (2) bis zur Lippendichtung (5) erstreckende innere Dichtfläche (3) zwei Flächenabschnitte (19,20) aufweist, welche in stumpfen Winkel aufeinander zulaufen.

9. Dichtung (1) nach einem der vorstehenden Ansprüche, dass die Lippendichtung (5) abgerundet ist.

10. Dichtung (1) nach dem vorstehenden Anspruch, **dadurch gekennzeichnet, dass** die Lippendichtung (5) mit einem mindestens 0,3 ihrer Dicke betragenden Radius abgerundet ist.

## Claims

1. Seal (1) for the socket end of a pipe, which is provided with a groove, in particular of waste water pipe, wherein the seal (1) is formed in an annular manner for insertion into the groove and,
in a cross-sectional view, has a front protrusion (2), which is adjoined by an inner lip seal (5) which is designed to come into contact with the outer surface of a pipe to be inserted, wherein the lip seal (5) is adjoined by a groove (6) and a further inner sealing surface (7) which terminates at a rear corner (4),
and wherein the outside of the seal has a first surface (8) which issues from the protrusion (2) and is inclined upwards with respect to a middle axis of the seal, and a second surface (9) which is inclined upwards starting from the corner, which extend towards each other at an obtuse angle,
**characterised in that** in the transition region (10) between the upwardly inclined first surface (8) and the upwardly inclined second surface (9) at least two steps (11, 12) are provided, and that the transition region (10) is formed in a rounded manner adjoining the steps (11, 12).

2. Seal (1) as claimed in the preceding claim, **characterised in that** the transition region between a lower step (11) and the first upwardly inclined surface (8) issuing from the protrusion (2) is formed as a hollow (14).

3. Seal (1) as claimed in the preceding claim, **characterised in that** the hollow (14) extends over more than 20% of the length of the first upwardly inclined surface (8).

4. Seal (1) as claimed in any one of the preceding claims, **characterised in that** the transition region between an upper step (12) and the second upwardly inclined surface (9) is formed as a rounded region (15).

5. Seal as claimed in the preceding claim, **characterised in that** the rounded region (15) extends over at least 5% of the length of the second upwardly inclined surface (9).

6. Seal (1) as claimed in any one of the preceding claims, **characterised in that** at least one, preferably both, forwardly directed surfaces (16, 17) of the steps (11, 12) are inclined in the outward forward direction with respect to a plane extending perpendicular to the middle axis of the seal.

7. Seal (1) as claimed in any one of the preceding claims, **characterised in that** the steps (11, 12) are disposed opposite the lip seal (5) and do not extend beyond the length of the lip seal (5) in the axial direction.

8. Seal (1) as claimed in any one of the preceding claims, **characterised in that** an inner sealing surface (3) extending from the protrusion (2) to the lip seal (5) has two surface portions (19, 20) which extend towards each other at an obtuse angle.

9. Seal (1) as claimed in any one of the preceding claims, [characterised in] that the lip seal (5) is rounded.

10. Seal (1) as claimed in the preceding claim, **characterised in that** the lip seal (5) is rounded with a radius amounting to at least 0.3 [times] its thickness.

## Revendications

1. Joint (1) pour le manchon d'extrémité, pourvu d'une rainure, d'une conduite, en particulier d'une conduite d'eaux usées, ledit joint (1) étant prévu avec une forme annulaire pour être mis en place dans la rainure, et
présentant, vu en coupe, une saillie (2) avant, à laquelle est adjacent un joint à lèvre (5), prévu pour reposer contre la surface extérieure d'une conduite à insérer,
une rainure (6) et une autre surface d'étanchéité (7) intérieure étant adjacentes au joint à lèvre (5), ladite surface d'étanchéité se terminant par un coin (4) arrière,
et la surface extérieure du joint présentant une première face (8) partant de la saillie (2), inclinée vers le haut par rapport à un axe central du joint, et une deuxième face (9) partant du coin, inclinée vers le haut, lesdites faces se rejoignant en formant un angle obtus,
**caractérisé en ce que**, dans la zone de transition (10) entre la première face (8) inclinée vers le haut et la deuxième face (9) inclinée vers le haut, sont présents au moins deux étages (11, 12), et **en ce que** la zone de transition (10) est réalisée en arrondi de manière adjacente aux étagements (11, 12).

2. Joint (1) selon la revendication précédente, **caractérisé en ce que** la zone de transition entre un étagement inférieur (11) et la première face (8) partant de la saillie (2), inclinée vers le haut, est réalisée comme un congé (14).

3. Joint (1) selon la revendication précédente, **caractérisé en ce que** le congé (14) s'étend sur plus de 20 % de la longueur de la première face (8) inclinée vers le haut.

4. Joint (1) selon l'une des revendications précédentes, **caractérisé en ce que** la zone de transition entre un étage supérieur (12) et la deuxième face (9) inclinée vers le haut est réalisée comme un arrondi (15).

5. Joint (1) selon la revendication précédente, **caractérisé en ce que** l'arrondi (15) s'étend sur au moins 5 % de la longueur de la deuxième face (9) inclinée vers le haut.

6. Joint (1) selon l'une des revendications précédentes, **caractérisé en ce qu'**au moins une, de préférence les deux faces (16, 17) dirigées vers l'avant des étages (11, 12) sont extérieurement inclinées vers l'avant par rapport à un plan s'étendant perpendiculairement à l'axe central du joint (1).

7. Joint (1) selon l'une des revendications précédentes, **caractérisé en ce que** les étages (11, 12) sont opposés au joint à lèvre (5) et ne s'étendent pas au-delà de la longueur du joint à lèvre (5) en direction axiale.

8. Joint (1) selon l'une des revendications précédentes, **caractérisé en ce qu'**une surface d'étanchéité (3) intérieure s'étendant de la saillie (2) au joint à lèvre (5) présente deux parties de surface (19, 20) qui se rejoignent en formant un angle obtus.

9. Joint (1) selon l'une des revendications précédentes, **caractérisé en ce que** le joint à lèvre (5) est arrondi.

10. Joint (1) selon la revendication précédente, **caractérisé en ce que** le joint à lèvre (5) est arrondi avec un rayon égal à au moins 0,3 fois son épaisseur.
